# EUROPÄISCHE PATENTSCHRIFT

(11) **EP 1 574 402 B1**
(45) Veröffentlichungstag und Bekanntmachung des Hinweises auf die Patenterteilung: **05.09.2007**
(21) Anmeldenummer: 04029939.8
(22) Anmeldetag: 17.12.2004
(51) Int. Cl.: B60R 21/045

(54) **Knieschutzeinrichtung für Insassen eines Kraftfahrzeugs**
Knee restraint for passengers of a vehicle
Protège-genoux pour passagers d'un véhicule

(30) Priorität: 09.03.2004 DE 102004011330
(43) Veröffentlichungstag der Anmeldung: 14.09.2005
(73) Patentinhaber: Dr.Ing. h.c. F. Porsche Aktiengesellschaft, 70435 Stuttgart (DE)
(72) Erfinder: Zierle, Matthias, 70794 Filderstadt (DE); Frank, Martin, 75417 Muehlacker (DE); Horsch, Guido, 75382 Althengstett (DE)

(56) Entgegenhaltungen:
- GB-A- 2 339 174
- US-A- 4 786 540
- US-A- 5 577 770
- US-A- 6 086 098
- US-A1- 2002 054 977
- US-B1- 6 170 872

## Beschreibung

Die Erfindung bezieht sich auf eine Knieschutzeinrichtung für Insassen eines Kraftfahrzeugs nach dem Oberbegriff des Patentanspruchs 1.

Ein bekannte Knieschutzeinrichtung, US 3,907,326, der eingangs genannten Gattung ist mit einer Knieaufschlagwand versehen, die unterhalb einer Energie absorbierenden Lenksäuleneinrichtung mittels einer Konsole in Lage gehalten ist. Die Knieaufschlagwand weist eine Trägerwand aus Metall auf, an die ein Schaumstoffpolster anschließt. Das Schaumstoffpolster ist mit einer Verkleidung aus Kunststoff abgedeckt. Eine vergleichbare Lösung ist auch der US 3,938 821 zu entnehmen.

Die DE 296 16 485 U1 befasst sich mit einer Sicherheitseinrichtung für ein Kraftfahrzeug mit einem Kniefänger für Insassen im Bereich einer Armaturentafel in einem Fahrgastraum des Kraftfahrzeugs. Der Kniefänger besitzt eine Knieaufschlagwand mit einem Strangpressprofil und ein Verkleidungsteil für letzteres, das sich benachbart von Knien der Insassen erstreckt und aus einem Kunststoff Hartschaum besteht.

Die gattungsgemäße GB 2 339 174 A beschreibt eine schaumgefüllte Polsterplatte für ein Kraftfahrzeug, z.B. ein Kniepolster im unteren Bereich eines Handschuhfachdeckels. Die Polsterplatte bildet dabei mehrere mit Schaum gefüllte Räume aus.

Die US 5,577,770 beschreibt eine Instrumententafel mit einem Knieschutz für Kraftfahrzeuge. Dieser Knieschutz umfasst zwei beabstandete Deformationsbügel und weist ein Trägerteil auf, welches als Lastverteiler für die Kniekräfte wirkt. Teil dieses Knieschutzes ist auch ein Energie absorbierender Einsatz, beispielsweise aus Schaum.

Schaumgefüllte Bauteile zur Absorption von Stoßkräften sind aus der US 2002/054977 A1 und aus der US 4,786,540 bekannt.

Es ist Aufgabe der Erfindung für Insassen eines Kraftfahrzeugs eine Knieschutzeinrichtung mit einer an einer Schalttafel angebrachten Knieaufschlagwand zu schaffen, die sich bei guter Funktion und einfacher Bauweise durch günstige Herstellung auszeichnet.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die Innenschale, die Außenschale und auch das Schaumstoffpolster auf einfache Art und Weise herstellbar und zu einer Einheit zusammenfügbar sind. Dies wird noch durch das im Querschnitt U-förmige Profil und den Randflansch sowie die erste Anschlussabwinkelung und die zweite Anschlussabwinkelung unterstützt. Schließlich ermöglichen die Knieaufschlagwand und das Deformationselement bei entsprechender Ausgestaltung d.h. wenn das Deformationselement eine Hauptdeformationsarbeit und die Knieaufschlagwand eine Teildeformationsarbeit leisten, eine hochwirksame Funktion bzw. gezielten Schutz für die Insassen des Kraftfahrzeugs.

In der Zeichnung wird ein Ausführungsbeispiel der Erfindung gezeigt, das nachstehend näher erläutert wird.

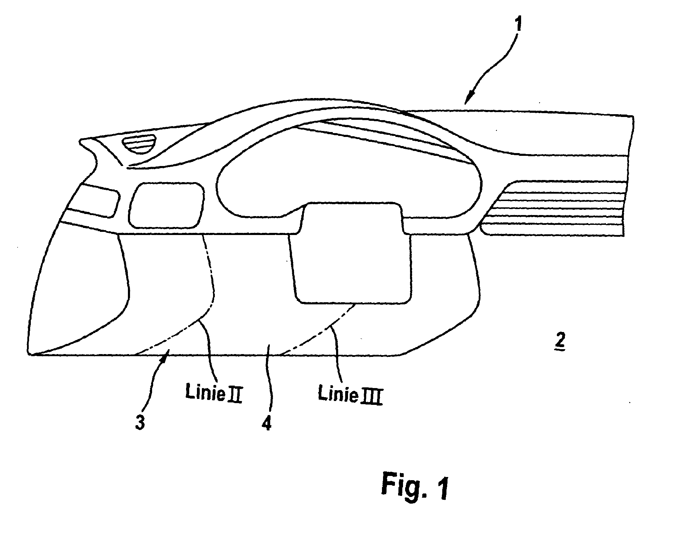

Es zeigen
- Fig. 1: eine Schrägansicht von hinten außen auf eine Schalttafel eines Kraftfahrzeugs mit der Knieschutzeinrichtung nach der Erfindung,
- Fig. 2: einen Schnitt nach der Linie II der Fig.1 in größerem Maßstab,
- Fig. 3: einen Schnitt nach der Linie III der Fig.1 in größerem Maßstab.

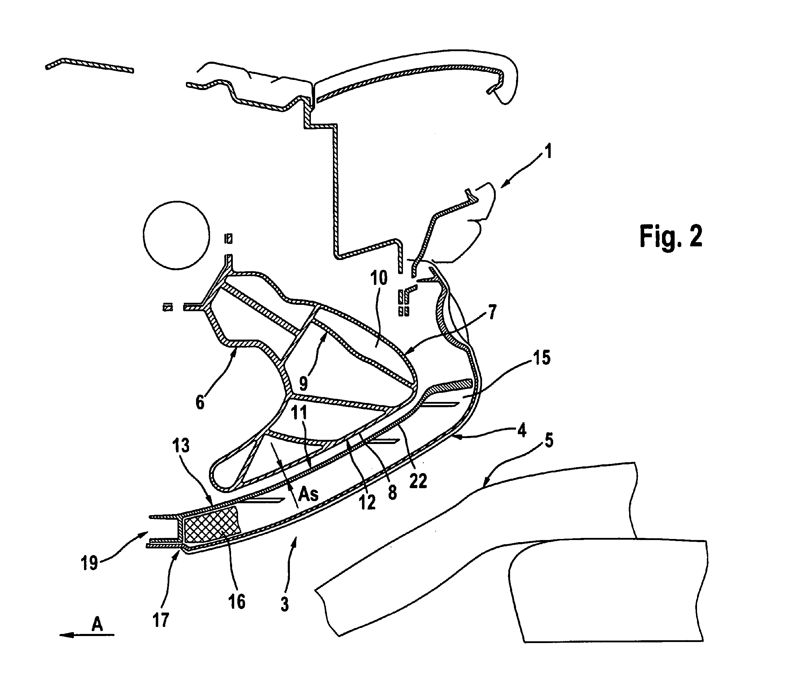

Eine Schalttafel 1 ist in einen Fahrgastraum 2 eines nicht näher dargestellten Kraftfahrzeugs eingebaut und mit einer Knieschutzeinrichtung 3 für Insassen versehen. Die Knieschutzeinrichtung 3 umfasst eine Knieaufschlagwand 4, die benachbart von Knien 5 der Insassen angeordnet ist - Fig. 2 - und ein Deformationselement 6 abdeckt. Das Deformationselement 6 wird bspw. Durch ein Strangpressprofil 7 aus einer Leichtmetalllegierung gebildete, das durch eine definierte Anordnung von Wänden 8, Stegen 9 und Hohlräumen 10 bei einer unfallbedingten Havarie des Kraftfahrzeugs einen gezielten Schutz für Insassen bietet, wenn sie vorwärts in Fahrtrichtung A verlagert werden. Dabei übernimmt das Deformationselement 6 eine Hauptdeformationsarbeit; die Knieaufschlagwand 4 eine Teildeformationsarbeit. Die Knieaufschlagwand 4 besitzt eine erste innere dem Deformationselement 6 zugekehrte Abstützfläche 11, die mit bspw. konstantem Abstand As zu einer zweiten Abstützfläche 12 des Deformationselementes 6 verläuft.

Die Knieaufschlagwand 4 ist mehrteilig aufgebaut und weist eine Innenschale 13 und eine Außenschale 14 auf, die einen Hohlraum 15 begrenzen. In den Hohlraum 15 ist ein Schaumstoffpolster 16 eingesetzt, und die Innenschale 13 und die Außenschale 14 sind an ersten und zweiten Verbindungszone 17 und 18 durch geeignete Maßnahme miteinander verbunden sind. Die Innenschale 13, die Außenschale 14 und das Schaumstoffpolster 16 sind aus Kunststoff hergestellt, wobei die Festigkeit der Innenschale 13 und die Außenschale 14 so ausgelegt ist, dass sie eine definierte Formsteifigkeit aufweisen, jedoch im Verein mit dem Schaumstoffpolster 16 eine Teildeformationsarbeit für die Knieschutzeinrichtung 3 leisten.

Zumindest die erste Verbindungszone 17 ist mit einem im Querschnitt U-förmigen Profil 19 mit Schenkeln 20 und 21 versehen, wovon der eine Schenkel 20 etwa zur Ebene einer die Abstützebene 11 darstellenden Innenschalenwand 22 ausgerichtet und mit dieser verbunden ist, wogegen an dem anderen Schenkel 21 ein Randflansch 23 der Außenschale 14 anliegt. Der Schenkel 21 und der Randflansch 23 sind durch Kleben oder einem anderen geeigneten Verfahren miteinander verbunden.

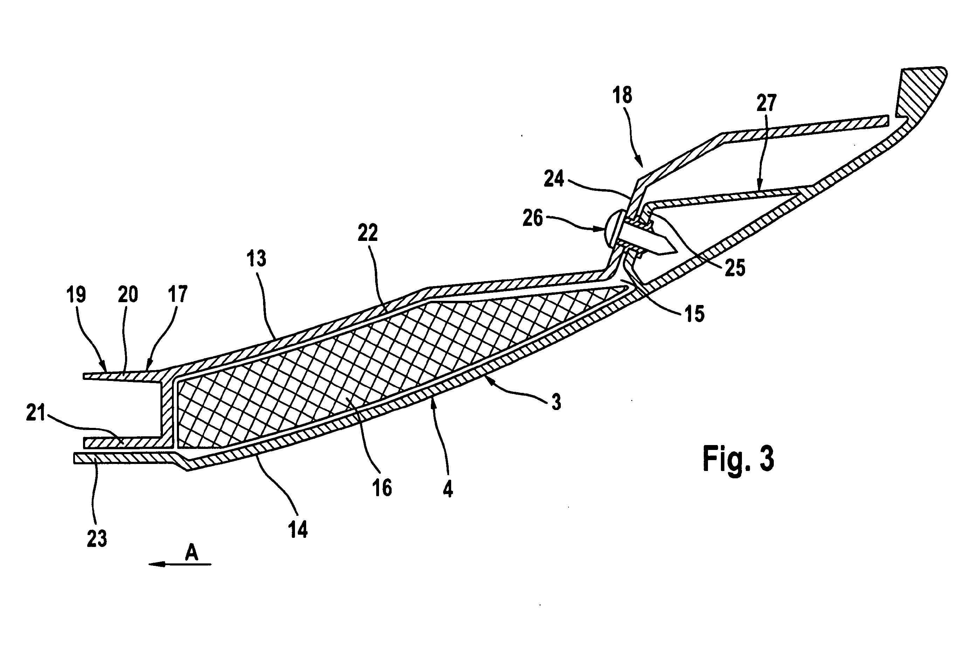

Im Ausführungsbeispiel sind zwischen der Innenschale 13 und der Außenschale 14 im Bereich der zweiten Verbindungszone 18 erste und zweite Anschlussabwinkelungen 24 und 25 vorgesehen - Fig. 3 -. Letztere sind unter Vermittlung ein oder mehrerer Schrauben 26 miteinander verbunden. Die erste Anschlussabwinkelung 24 ist an der Innenschale 22 vorgesehen; die zweite Anschlussabwinkelung 25 an der Außenschale 14. Die zweite Anschlussabwinkelung 25 ist Bestandteil eines Hohlkörpers 27, der in die Außenschale 14 integriert ist und der Außenschale 14 im Bereich der zweiten Verbindungszone 18 eine definierte Steifigkeit verleiht.

## Patentansprüche

1. Knieschutzeinrichtung für Insassen eines Kraftfahrzeugs, die im Bereich einer Schalttafel (1) angeordnet ist und eine Knieaufschlagwand (4) mit einem Schaumstoffpolster(16) umfasst, welche Knieaufschlagwand(4) sich benachbart von Knien der Insassen erstreckt, wobei die Knieaufschlagwand (4) eine Innenschale (13) und eine Außenschale (14) aufweist, die einen das Schaumstoffpolster (16) aufnehmenden Hohlraum (15) begrenzen und an Verbindungszonen (17 und 18) zusammengesetzt sowie durch geeigneten Maßnahmen miteinander verbunden sind, wobei wenigstens eine erste Verbindungszone (17) zwischen der Innenschale (13) und der Außenschale (14) mit einem im Querschnitt U-förmigen Profil (19) mit Schenkeln (20 und 21) versehen ist, **dadurch gekennzeichnet, dass** die Knieaufschlagwand (4) ein Deformationselement (6) abdeckt, dergestalt, dass das Deformationselement (6) die Hauptdeformationsarbeit und die Knieaufschlagwand (4) eine Teildeformationsarbeit leisten, wobei eine erste innere Abstützfläche (11) der Knieaufschlagwand (4) mit Abstand (As) zu einer zweiten Abstützfläche des Deformationselements (6) verläuft, wobei der eine Schenkel (20) des U-förmigen Profils (19) etwa zur Ebene einer die innere Abstützfläche (11) darstellenden Innenschalenwand (22) ausgerichtet und mit dieser verbunden ist, wobei an dem anderen Schenkel (21) ein Randflansch (23) der Außenschale (14) anliegt.

2. Knieschutzeinrichtung nach Anspruch 1, **dadurch gekennzeichnet, dass** der Schenkel (21) und der Randflansch (23) durch Kleben miteinander verbunden sind.

3. Knieschutzeinrichtung nach Anspruch 1, **dadurch gekennzeichnet, dass** im Bereich der zweiten Verbindungszone (18) zwischen Innenschale (13) und Außenschale (14) eine erste Anschlussabwinkelung (24) und eine zweite Anschlussabwinkelung (25) zusammengeführt sind.

4. Knieschutzeinrichtung nach Anspruch 3, **dadurch gekennzeichnet, dass** die erste Anschussabwinkelung (24) und die zweite Anschlussabwinkelung (25) unter Vermittlung von Schrauben (26) miteinander verbunden sind.

5. Knieschutzeinrichtung nach Anspruch 1, **dadurch gekennzeichnet, dass** das Profil (19) an der Innenschale (13) und der Randflansch (23) an der Außenschale (14) vorgesehen sind.

6. Knieschutzeinrichtung nach Anspruch 3, **dadurch gekennzeichnet, dass** die erste Anschlussabwinkelung (24) an der Innenschale (13) und die zweite Anschlussabwinkelung (25) an der Außenschale (14) vorgesehen sind.

7. Knieschutzeinrichtung nach Anspruch 6, **dadurch gekennzeichnet, dass** die zweite Anschussabwinkelung (25) Bestandteil eines Hohlkörpers (27) der Außenschale (14) ist.

## Claims

1. A knee protector for occupants of a motor vehicle, which knee protector is arranged in the region of a dashboard (1) and comprises a knee impact wall (4) with foamed material padding (16), which knee impact wall (4) extends adjacently to the occupants' knees, wherein the knee impact wall (4) has an inner shell (13) and an outer shell (14) which define a hollow space (15) receiving the foamed material padding (16) and are placed together along connecting zones (17 and 18) and are connected to each other by suitable measures, wherein at least one first connecting zone (17) between the inner shell (13) and the outer shell (14) is provided with a profile (19) with a U-shaped cross-section and arms (20 and 21), **characterised in that** the knee impact wall (4) covers a deformation member (6) in such a way that the deformation member (6) performs the main deformation work and the knee impact wall (4) performs partial deformation work, wherein a first inner supporting surface (11) of the knee impact wall (4) extends with spacing (As) from a second supporting surface of the deformation member (6), wherein the one arm (20) of the U-shaped profile (19) is approximately aligned with the plane of an inner shell wall (22) forming the inner supporting surface (11) and is connected to the inner shell wall (22), wherein an edge flange (23) of the outer shell (14) rests against the other arm (21).

2. A knee protector according to claim 1, **characterised in that** the arm (21) and the edge flange (23) are glued together.

3. A knee protector according to claim 1, **characterised in that** a first connecting return (24) and a second connecting return (25) are brought together in the region of the second connecting zone (18) between the inner shell (13) and the outer shell (14).

4. A knee protector according to claim 3, **characterised in that** the first connecting return (24) and the second connecting return (25) are connected to each other by means of screws (26).

5. A knee protector according to claim 1, **characterised in that** the profile (19) is provided on the inner shell (13) and the edge flange (23) is provided on the outer shell (14).

6. A knee protector according to claim 3, **characterised in that** the first connecting return (24) is provided on the inner shell (13) and the second connecting return (25) is provided on the outer shell (14).

7. A knee protector according to claim 6, **characterised in that** the second connecting return (25) is part of a hollow body (27) of the outer shell (14).

## Revendications

1. Dispositif de protection des genoux pour les passagers d'un véhicule automobile, qui est agencé dans la zone d'un tableau de bord (1) et comporte une paroi d'impact pour genoux (4) avec un rembourrage de mousse (16), laquelle paroi d'impact pour genoux (4) est située à proximité des genoux des passagers, ladite paroi d'impact pour genoux (4) comportant une coque intérieure (13) et une coque extérieure (14), qui délimitent une cavité (15) et qui sont réunies au niveau de zones d'assemblage (17 et 18) et assemblées l'une à l'autre par des moyens appropriés, sachant qu'au moins une première zone d'assemblage (17) entre la coque intérieure (13) et la coque extérieure (14) est munie d'un profilé (19) à section en forme de U et avec deux branches (20 et 21), **caractérisé en ce que** la paroi d'impact pour genoux (4) masque un élément de déformation (6), de telle sorte que l'élément de déformation (6) fournit le travail de déformation principal et la paroi d'impact pour genoux (4) fournit un travail de déformation partiel, une première face d'appui (11) intérieure de la paroi d'impact pour genoux (4) étant située à distance (As) d'une deuxième face d'appui de l'élément de déformation (6), une branche (20) étant orientée sensiblement selon le plan d'une paroi de coque intérieure (22) formant la face d'appui (11) et étant reliée à ladite paroi, une collerette périphérique (23) de la coque extérieure(14) étant en appui contre l'autre branche (21).

2. Dispositif de protection des genoux selon la revendication 1, **caractérisé en ce que** la branche (21) et la collerette périphérique (23) sont assemblées l'une à l'autre par collage.

3. Dispositif de protection des genoux selon la revendication 1, **caractérisé en ce qu'**un premier coude de raccordement (24) et un deuxième coude de raccordement (25) sont réunis entre la coque intérieure (13) et la coque extérieure (14) dans la région de la deuxième zone d'assemblage (18).

4. Dispositif de protection des genoux selon la revendication 3, **caractérisé en ce que** le premier coude de raccordement (24) et le deuxième coude de raccordement (25) sont assemblés l'un à l'autre au moyen de vis (26).

5. Dispositif de protection des genoux selon la revendication 1, **caractérisé en ce que** le profilé (19) est prévu sur la coque intérieure (13) et la collerette périphérique (23) est prévue sur la coque extérieure (14).

6. Dispositif de protection des genoux selon la revendication 3, **caractérisé en ce que** le premier coude de raccordement (24) est prévu sur la coque intérieure (13) et le deuxième coude de raccordement (25) est prévu sur la coque extérieure (14).

7. Dispositif de protection des genoux selon la revendication 6, **caractérisé en ce que** le deuxième coude de raccordement (25) fait partie intégrante d'un corps creux (27) de la coque extérieure (14).
